Europäisches Patentamt

European Patent Office

Office européen des brevets

(11) Publication number: **0 338 791**
**A2**

# EUROPEAN PATENT APPLICATION

(21) Application number: **89303860.4**

(22) Date of filing: **19.04.89**

(51) Int. Cl.⁴: **C 09 D 11/10**

(30) Priority: **20.04.88 GB 8809281**

(43) Date of publication of application:
**25.10.89 Bulletin 89/43**

(84) Designated Contracting States:
**AT BE CH DE ES FR GB IT LI NL SE**

(71) Applicant: **Sericol Group Limited**
**24 Parsons Green Lane**
**London SW6 4HT (GB)**

(72) Inventor: **Fassam, Robert Augustus**
**6 Audley Avenue Westbrook**
**Margate Kent (GB)**

**Weston, Harry**
**27 Southwood Gardens**
**Ramsgate Kent (GB)**

(74) Representative: **Claisse, John Anthony, Dr. et al**
**97 Portway**
**Wells Somerset BA5 2BR (GB)**

(54) **Printing Inks.**

(57) The invention concerns printing inks, particularly for screen printing. The inks consist of a water-in-oil emulsion, the non-aqueous phase including a radiation curable component and a transparent pigment. Such inks have shown high screen stability with good cure speed, combined with low printed film weight compared with prior art radiation curable inks. Conventional radiation-curable components can be used, for example they can include one or more reactive oligomers, unsaturated monomers and photoinitiators or photochemical cross-linking agents. Examples of pigments include azo and diazo condensation pigments.

EP 0 338 791 A2

**Description**

## PRINTING INKS

This invention concerns printing inks, and in particular screen printing inks.

Until recently the majority of screen printing inks have been solvent based and dried by evaporation of the solvent. However, these inks suffer from having to be formulated to compromise between increasing the drying speed on the printed substrate to increase the rate of printing and reducing the rate of hardening of the ink in the mesh of the screen to prevent blocking of the screen mesh. The ability of an ink to resist hardening in the screen is known as screen stability. This compromise results in the speed of drying of the inks having to be extended if they are to have sufficient stability to maintain detail during a print production run from a particular stencil.

More recently, radiation curable inks have been proposed which have screen stability which does not depend on cure speed. This allows fast cure speeds to be obtained without sacrificing screen stability. Unfortunately, screen printed radiation curable inks have the disadvantage of a high film weight or ink deposit. This can be minimised to a certain extent by the use of fine or semi-calendered screen meshes, but it is still not ideal.

A hitherto proposed method of obtaining a lower film weight with a radiation curable coating is to incorporate water using an oil in water emulsion, a radiation curable composition being emulsified in a water based varnish. Such systems have the disadvantage of having poor screen stability.

Alternatively, it has been proposed to use water soluble radiation curable resins/oligomers. However, when used for screen printing they offer little advantage over non-aqueous radiation curable inks as the amount of water that can be added while maintaining a satisfactory printing viscosity is small (approximately 20 percent by weight).

According to the present invention there is provided a screen printing ink comprising a water-in-oil emulsion, the non-aqueous phase comprising a radiation curable component and a transparent pigment.

Screen printing inks of this invention have shown a high level of screen stability without compromising cure speed, combined with an ability to obtain a substantially lower printed film weight than with hitherto proposed radiation curable inks, the dried and cured film weight often being similar to that obtained with solvent based inks. Since solvents are in general unnecessary in inks of the present invention, the environmental problems associated with certain solvents used in hitherto proposed screen printing inks can be avoided.

The amount of water present in the inks of the present invention is preferably from 5 to 80 percent, and more preferably from 20 to 50 percent by weight of the ink. The aqueous phase can be prepared using distilled, deionised or tap water.

The radiation curable component of the inks of the present invention can be selected from those known in the art for producing non-aqueous radiation curable inks. The non-aqueous phase preferably contains one or more reactive oligomers and/or one or more mono- of multi-functional unsaturated monomers, and one or more photoinitiators and/or photochemical cross-linking agents. Examples of radiation curable components that can be used include reactive oligomers, e.g. polyester acrylates, polyurethane acrylates or epoxy acrylates; monomers, e.g. butane-1,4-diol diacrylate, tripropylene glycol diacrylate, di-, tri- or tetra-ethylene glycol diacrylate, dipentaerythritol hexacrylate, trimethylolpropane ethoxylate triacrylate or trimethylol propane triacrylate; and photoinitiators and/or photochemical crosslinking agents, e.g. a benzoin ether, a substituted acetophenone derivative, an acyloxime ester, a benzil ketal, a cyclic benzoin, benzophenone, a thioxanthone, a benzil or a quinone.

The non-aqueous phase can also contain non-crosslinkable resins which increase the viscosity of the inks and serve, for example, to provide a wider adhesion range of the printed ink to substrates, e.g. vinyl chloride/vinyl acetate resins or acrylic resins.

The pigments used in the inks of the present invention should be transparent. Examples of yellow pigments which can be used include azo and diazo condensation yellow pigments, e.g. C.I. Pigment Yellow 83, 93 or 128. Examples of magenta pigments which can be used include azo condensation red pigments, e.g. C.I. Pigment Red 146 or 184, or quinacridone reds, e.g. C.I. Pigment Red 122; and examples of cyan pigments which can be used include copper phthalocyanine $\beta$-form, e.g. C.I. Pigment Blue 15.

The aqueous phase can contain various flow, scuff, emulsion stabilising or viscosity control aids. Examples of water soluble resins which can be used to improve emulsion stability include sodium carboxymethyl cellulose, hydoxyethyl cellulose, carboxymethyl hydroxyethyl cellulose, hydroxypropyl cellulose, methyl cellulose, hydroxypropyl methyl cellulose, hydroxybutyl methyl cellulose, methyl hydroxyethyl cellulose, acrylamido-modified starch, smectite clays, starches, pectins, alginates, polyacrylic acids, polyvinyl alcohols, poly-(N-vinyl-2-pyrollidone) and polyvinyl acetate. Examples of resins which can be used to stabilise the emulsions include colloidal dispersions of polyvinyl acetate resins. Non-ionic, cationic or anionic emulsifiying agents, or mixtures thereof, can also be used to stabilise the emulsions.

The lay and appearance of dried and cured inks of the present invention can be improved by the inclusion of a water soluble monomer and/or reactive oligomer.

The speed of drying or evaporation of water from the inks and/or the viscosity of the inks can be adjusted, for example by the inclusion of a water soluble amine, e.g. a tertiary amine or an amine acrylate, by the inclusion of a water miscible organic solvent, or by the inclusion of a water soluble monomer and/or reactive oligomer, e.g. N-vinyl-2-pyrrolidone.

The lay of the ink as well as its scuff/mar resistance can be improved by the inclusion of a silicone or non-silicone flow aid. Mar resistance and slip can be improved by the inclusion of a natural or synthetic wax. Such waxes can also reduce the gloss of the dried and cured inks.

An inhibitor/stabiliser can be included to reduce the possibility of premature polymerisation of the radiation curable component, e.g. p-methoxyphenol.

The gloss of the dried and cured inks can be adjusted by the inclusion of a mineral powder, for example finely divided silicon dioxide, barium sulfate, calcium carbonate or hydrous magnesium silicate.

Cure speed, and particularly surface cure, can be increased by the use of a water soluble photoinitiator.

The color strength of the cured inks can be increased by the inclusion of a water dispersible pigment or dye in the aqueous phase.

Inks of the invention can be produced by first mixing the components of the radiation-curable, non-aqueous phase including the addition and subsequent dispersion of one or more transparent pigments. The aqueous phase is then preferably added slowly whilst stirring, for example using an emulsifying stirrer. However, in some cases it can be advantageous to add certain ingredients after the emulsificiation stage, for example the photoinitiator (to minimise the likelihood of premature cure) and the mineral powders (to minimise thickening up which usually occurs with their addition).

The following Example is given by way of illustration only. All parts are by weight based on the weight of the final ink.

Example

The following ingredients were mixed using a stirrer and then passed over a triple roll mill to disperse the pigment until the mixture had a Hegman Gauge reading of 2 to 3 microns.

| | |
|---|---|
| Copper phthalocyanine β-form C.I. Pigment Blue 15 | 2.0 |
| Difunctional polyester urethane acrylate | 8.0 |
| Tripropylene glycol diacrylate | 6.0 |

The following ingredients were then added, and the mixture was stirred until homogeneous.

| | |
|---|---|
| Difunctional polyester urethane acrylate | 15.0 |
| Tripropylene glycol diacrylate | 15.0 |
| 1-Benzoylcyclohexanol | 6.0 |
| Micronised polyethylene wax | 3.0 |
| Polyethyl hexyl acrylate | 2.0 |
| Methyl diethanolamine | 1.0 |
| Highly dispersed amorphous silicon dioxide | 2.0 |

The aqueous phase was then added whilst stirring using an emulsifying stirrer.

| | |
|---|---|
| 2.0% solution of hydroxypropyl cellulose in tap water | 40.0 |

The result was a cyan ink which, when screen printed under the same conditions as an identical radiation curable ink but without the aqueous phase present, exhibited superior dot definition with a much lower film weight whilst having the same cure speed and excellent screen stability.

Claims

1. A screen printing ink comprising a water-in-oil emulsion, the non-aqueous phase comprising a radiation curable component and a transparent pigment.

2. A screen printing ink according to claim 1, wherein the amount of water present is from 5 to 80 percent by weight of the ink.

3. A screen printing ink according to claim 2, wherein the amount of water present is from 20 to 50 percent by weight of the ink.

4. A screen printing ink according to any of the preceding claims, wherein the amount of transparent pigment present is not more than 20 percent by weight of the non-aqueous phase.

5. A screen printing ink according to any of the preceding claims, wherein the radiation curable component comprises a reactive oligomer and/or a mono- or multi-functional unsaturated monomer, and a photoinitiator and/or a photochemical cross-linking agent.

6. A screen printing ink according to claim 5, wherein the reactive oligomer comprises a polyurethane acrylate, an epoxy acrylate, or a polyester acrylate.

7. A screen printing ink according to claim 5 or claim 6, wherein the monomer comprises butane-1,4-diol diacrylate, tripropylene glycol diacrylate, di-, tri- or tetra-ethylene glycol diacrylate, dipentaerythritol hexacrylate, trimethylolpropane ethoxylate triacrylate or trimethylol propane triacrylate.

8. A screen printing ink according to any of the preceding claims, including a flow, scuff, emulsion stabilising or viscosity control aid.

9. A screen printing ink according to any of the preceding claims which contains mineral powder.

10. A screen printing ink according to any of the preceding claims, which contains a water soluble monomer and/or reactive oligomer.

.